Europäisches Patentamt

European Patent Office

Office européen des brevets

(19)

(11) Numéro de publication: **0 274 152 B1**

## (12) FASCICULE DE BREVET EUROPEEN

(45) Date de publication de fascicule du brevet: **04.03.92**   (51) Int. Cl.⁵: **H04N 5/63**

(21) Numéro de dépôt: **87202382.5**

(22) Date de dépôt: **02.12.87**

(54) **Alimentation à découpage pour un téléviseur muni d'un système de veille.**

(30) Priorité: **05.12.86 FR 8617070**

(43) Date de publication de la demande:
**13.07.88 Bulletin 88/28**

(45) Mention de la délivrance du brevet:
**04.03.92 Bulletin 92/10**

(84) Etats contractants désignés:
**DE FR GB**

(56) Documents cités:
**FR-A- 2 520 958**
**FR-A- 2 535 560**

(73) Titulaire: **PHILIPS ELECTRONIOUE GRAND PUBLIC**
**51, Rue Carnot**
**F-92150 Suresnes(FR)**
(84) Etats contractants désignés:
**FR**

(73) Titulaire: **N.V. Philips' Gloeilampenfabrieken**
**Groenewoudseweg 1**
**NL-5621 BA Eindhoven(NL)**
(84) Etats contractants désignés:
**DE GB**

(72) Inventeur: **Decraemer,Alain Société Civile S.P.I.D.**
**209, rue de l'Université**
**F-75007 Paris(FR)**

(74) Mandataire: **Caron, Jean et al**
**Société Civile S.P.I.D. 156, Boulevard Haussmann**
**F-75008 Paris(FR)**

## Description

L'invention concerne un récepteur de télévision muni d'un dispositif de veille, comportant une alimentation à découpage avec une inductance ballast et un dispositif hacheur qui alimente un étage de puissance de balayage lignes comportant un transistor interrupteur et un transformateur lignes, la plupart des autres circuits utilisateurs étant alimentés au moyen d'enroulements auxiliaires du transformateur lignes, l'alimentation à découpage étant synchronisée en marche normale par le balayage lignes et la mise en veille étant obtenue par l'arrêt du balayage lignes.

Un récepteur selon l'introduction ci-dessus est connu du document FR-A-2 520 958. Le dispositif décrit dans ce document correspond au préambule ci-dessus. En outre, quel que soit le mode de fonctionnement (normal ou en veille), le circuit selon ce document transmet la puissance de l'alimentation à découpage au reste du téléviseur au travers du transformateur lignes, ceci pendant les retours de lignes, l'arrêt du balayage lignes est obtenu par mise en court-circuit du transistor interrupteur, et le courant qui alimente le circuit de veille passe alors par ce transistor. Ce circuit présente l'inconvénient que le circuit de veille y est relativement complexe et nécessite de nombreux composants additionnels et notamment deux transistors de puissance (référence Q2 et Q3 dans le document cité) en plus du transistor interrupteur.

L'invention se propose de fournir une solution pour la mise en veille et pour l'isolement des circuits du téléviseur vis à vis du secteur, solution plus économique et plus simple.

A cet effet, le récepteur selon l'invention est notamment remarquable en ce que, l'étage de puissance pour le balayage lignes étant alimenté par connexion galvanique avec l'alimentation à découpage et l'arrêt du balayage lignes pour la mise en veille étant obtenu par coupure du transistor interrupteur, le dispositif de veille est alimenté directement par l'alimentation à découpage au moyen d'un transformateur distinct du transformateur de lignes, et en ce que l'alimentation à découpage est munie de moyens d'auto-oscillation et de régulation autonomes afin que lorsque le balayage lignes est arrêté, l'alimentation à découpage continue à fournir la même tension.

L'alimentation du dispositif de veille directement par l'alimentation à découpage en même temps que le balayage ligne pose cependant un problème car sa tension d'alimentation est beaucoup plus basse que celle du circuit de balayage ligne. Pour résoudre ce problème ledit transformateur distinct du transformateur de lignes est constitué à partir de l'inductance ballast qui est avantageusement munie d'au moins un enroulement auxiliaire pour alimenter le dispositif de veille.

Pour permettre une synchronisation immédiate de l'oscillateur ligne lors de la phase de démarrage l'oscillateur ligne est avantageusement alimenté lui aussi par un enroulement auxiliaire de l'inductance ballast.

Les moyens d'auto-oscillation et de régulation autonomes de l'alimentation à découpage sont réalisés d'une manière particulièrement simple et économique lorsque la commande du dispositif hacheur et la régulation de la tension fournie par l'alimentation à découpage sont assurées ensemble par un dispositif comparateur qui pilote le circuit de commande du dispositif hacheur de façon à déclencher sa conduction lorsque ladite tension est inférieure à une valeur de référence et à arrêter cette conduction dans le cas contraire. Avec ce dispositif l'alimentation oscille librement à une fréquence indéterminée. Pour éviter d'éventuelles interférences conduisant à des lignes ou des moirures de l'image il est avantageux que le téléviseur soit muni de moyens pour assurer que l'alimentation à découpage passe du mode auto-oscillant au mode synchronisé sur le balayage ligne lorsqu'elle n'est plus en état de veille.

Dans des récepteurs haut de gamme où l'étage audio est relativement puissant il est avantageux qu'il soit lui aussi alimenté par un enroulement auxiliaire de l'inductance ballast. Ceci permet d'éviter une interaction du son et de l'image.

La description qui va suivre, en regard des dessins annexés décrivant des exemples non limitatifs fera bien comprendre comment l'invention peut être réalisée.

La figure 1 est une représentation schématique des dispositifs concernés par l'invention dans un téléviseur.

La figure 2 est un schéma détaillé d'un exemple de réalisation de l'invention.

Dans ce qui suit, on appelle dispositif un ensemble réalisant une fonction, et circuit un assemblage de composants qui, en général est une partie d'un dispositif.

Le principe d'ensemble de l'alimentation consiste à redresser d'abord la tension du secteur sans transformateur, à réguler la tension continue obtenue, au moyen d'un dispositif à découpage, lequel alimente l'étage de puissance ligne, à partir duquel sont obtenues la plupart des tensions pour d'autres circuits utilisateurs au moyen d'enroulements auxiliaires sur le transformateur ligne. Si ce dernier fournit la plupart des tensions nécessaires dans le téléviseur, il ne fournit cependant pas la tension d'alimentation pour le dispositif de veille. Ce dernier qui comprend les circuits pour la réception de la télécommande et pour procéder au moins à l'arrêt et au démarrage du téléviseur (passage de l'état de veille au fonctionnement normal et réciproquement) est alimenté directement par l'alimentation à découpage, comme l'étage de puissance ligne. Ainsi l'état de veille est obtenu en laissant en route l'alimentation à découpage alors qu'on arrête le balayage ligne.

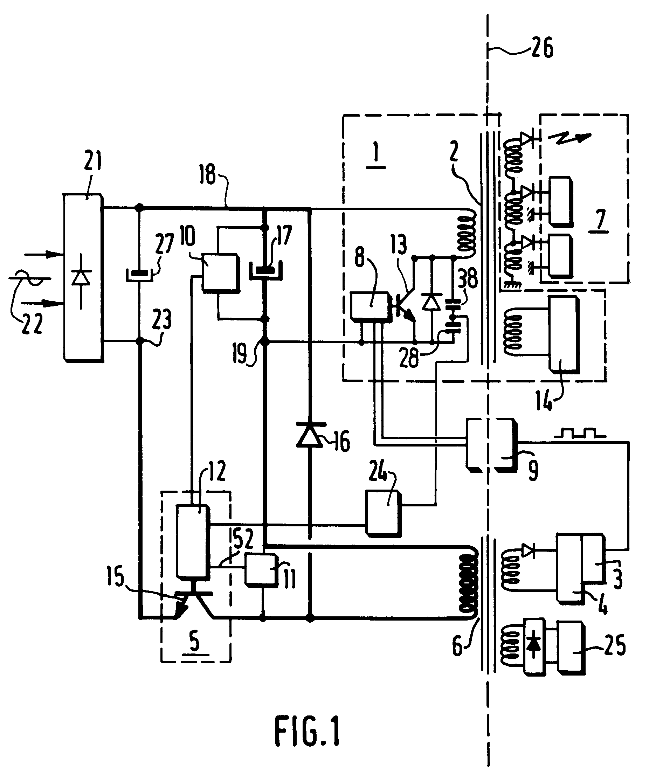

Sur la figure 1 la tension secteur 22 de 227 volts est redressée directement par un dispositif redresseur 21 et fournit aux bornes 18, 23 d'un condensateur 27 une tension continue d'environ 300 volts.Le câblage indiqué par un trait épais correspond à l'essentiel de l'alimentation à découpage. En série de la borne 18 à la borne 23 sont disposés une capacité réservoir 17 aux bornes 18, 19 de laquelle est développée la tension régulée obtenue par le découpage, une inductance ballast 6, et un dispositif hacheur 5. Une diode dite de récupération 16 relie le point commun de l'inductance ballast et du hacheur avec la borne 18, pour fournir un chemin au courant de l'inductance lorsque le hacheur coupe le circuit. Tout ceci est bien connu et ne requiert pas de plus ample description.

L'étage de puissance 1 du balayage ligne est branché aux bornes de la capacité 17. Il fournit au moyen d'enroulements dits auxiliaires du transformateur ligne 2 des tensions d'utilisation aux circuits utilisateurs 7.

L'alimentation à découpage fournit entre les bornes 18, 19 une centaine de volts, alors que le dispositif de veille 4 a besoin d'une tension d'alimentation d'environ 5 volts. Ce dernier n'est donc pas alimenté en parallèle avec l'étage de ligne mais au moyen d'une tension prélevée sur l'inductance ballast 6 grâce à un enroulement auxiliaire. Cet enroulement a un faible volume et n'entraîne pas d'augmentation des dimensions du noyau de l'inductance. Le transformateur ainsi réalisé est donc très petit. Il doit toutefois être isolé vis à vis du primaire selon les normes en matière d'isolement secteur.

L'alimentation est munie de moyens d'auto-oscillation et de régulation autonomes, constitués d'un dispositif comparateur 10 délivrant un signal qui est fonction de la tension fournie à l'étage ligne par les bornes 18, 19, signal transmis au circuit de commande 12 du dispositif hacheur. Ces moyens permettent à l'alimentation à découpage de fonctionner et de fournir une tension régulée, que l'étage de puissance ligne soit ou non en service. Son fonctionnement est basé sur le principe suivant : A la mise sous tension du téléviseur la tension fournie est nulle. Le dispositif comparateur 10 fournit alors un signal qui rend conducteur le dispositif hacheur 5. Le courant croît dans l'inductance 6 et charge le condensateur 17. Cette charge est rapide puisque l'étage de puissance ligne ne consomme pas encore de courant. Lorsque la tension désirée est atteinte, le comparateur 10 coupe le hacheur 5. La tension délivrée décroît alors à une vitesse qui dépend de la consommation, et lorsqu'elle est descendue en dessous d'un seuil prédéterminé, le hacheur 5 est remis en conduction, la tension remonte, et ainsi de suite. Un phénomène alterné de conduction/coupure est donc entretenu, et sa fréquence dépend de la puissance consommée : lorsque celle-ci augmente, la tension décroît plus vite mais remonte plus lentement : ceci compensant cela, la fréquence de découpage ne varie pas excessivement avec la charge.

Ainsi la commande du dispositif hacheur et la régulation de la tension fournie par l'alimentation sont assurées ensemble par un dispositif comparateur 10 qui pilote le circuit de commande 12 du dispositif hacheur 5 de façon à déclencher sa conduction lorsque ladite tension est inférieure à une valeur de référence et à arrêter cette conduction dans le cas contraire. On économise ainsi l'habituel circuit oscillateur pilotant le découpage.

Le circuit oscillateur ligne 3 est avantageusement placé du côté isolé du secteur, car il est relié aux étages de signal du téléviseur, particulièrement au séparateur de synchronisation. Il est alimenté en même temps que le dispositif de veille par l'enroulement auxiliaire de l'inductance ballast 6. Ainsi il est toujours en fonctionnement même pendant la veille, oscillant librement lorsqu'il ne reçoit pas de signal de synchronisation, et lors de la mise en fonctionnement normale du téléviseur, il fournit immédiatement un signal pratiquement à fréquence ligne aux circuits de commande 8 du transistor 13 de puissance ligne, via un élément 9 d'isolation galvanique. Ici les deux éléments 3 et 4 sont alimentés par le même enroulement auxiliaire mais ils pourraient aussi bien être reliés chacun à un enroulement distinct.

La capacité d'accord de retour ligne est constituée de deux condensateurs 28, 38 en série, formant un diviseur capacitif. A partir de ce diviseur, un signal de surtension de retour ligne est fourni à un circuit 24 qui est relié au circuit de commande 12 du dispositif hacheur. Ce circuit 24 assure en association avec le circuit 12 que l'alimentation à découpage passe du mode auto-oscillant au mode synchronisé sur le balayage ligne lorsqu'elle n'est plus en état de veille.

L'élément de commutation du dispositif hacheur 5 est un transistor NPN 15, et afin de ralentir la montée de la tension appliquée au dispositif hacheur, c'est à dire au collecteur du transistor 15, il est prévu un dispositif capacitif retardeur 11, connecté aux bornes de l'inductance ballast 6. Ce dispositif comporte un système à diodes pour redresser une tension, cette dernière étant appliquée à titre d'alimentation au circuit de commande 12 du hacheur 5, via la connexion 52.

La référence 25 indique un étage de puissance audio qui est lui aussi alimenté par un enroulement auxiliaire de l'inductance ballast 6. On peut prélever sur ces enroulements environ le tiers de la puissance dissipée dans l'ensemble du téléviseur (ce qui correspond à la récupération de courant par la diode 16). Ainsi, cette puissance est suffisante pour des étages audio de qualité. Cette manière de produire la puissance audio évite toute interférence entre le son et l'image. En outre, la modulation audio est transmise par un étage préamplificateur alimenté au moyen du transformateur ligne. Ainsi lors de la veille, il n'y a pas de modulation et l'étage de puissance audio consomme seulement un courant de repos très faible (c'est un étage dit push-pull classe B).

La référence 26 indique une ligne immatérielle de séparation entre les circuits reliés galvaniquement au secteur et les circuits isolés. Ainsi l'alimentation et l'étage de puissance ligne sont seuls reliés au secteur. Tous les autres circuits et en particulier l'oscillateur ligne, le dispositif de veille, tous les circuits audio, les étages vidéo, le tuner qui sont susceptibles d'être reliés à l'extérieur par des prises accessibles à l'usager, sont isolés du secteur. Le transformateur ligne doit répondre aux normes d'isolement secteur entre son enroulement primaire et ses enroulements secondaires.

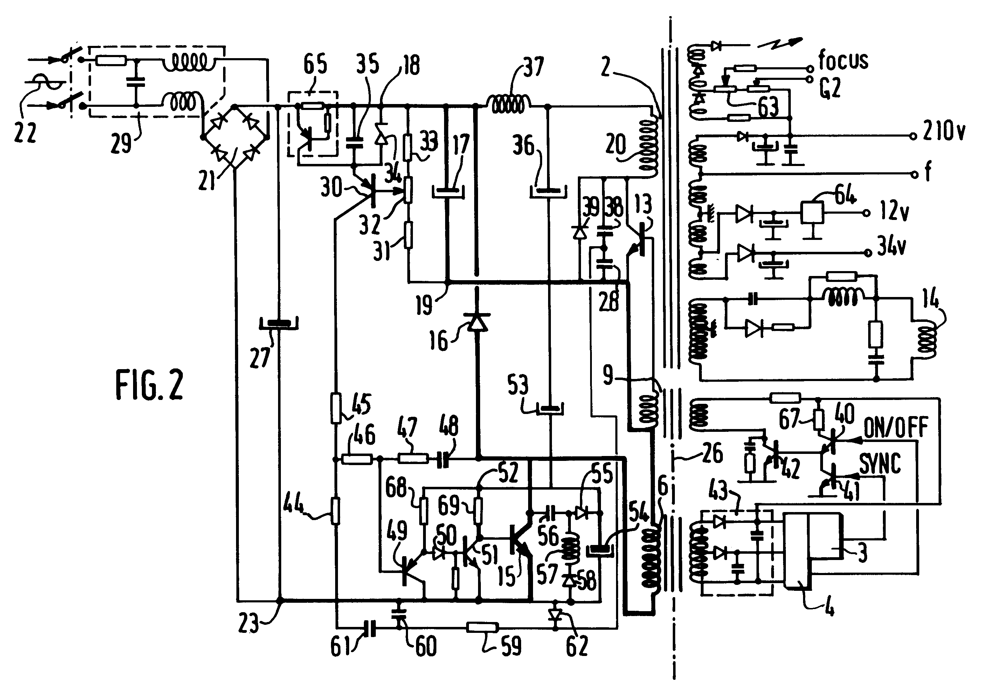

Sur la figure 2, tous les éléments correspondants à ceux de la figure 1 portent les mêmes références. La connexion en trait épais correspond à celle de la figure 1. La tension de secteur 22 arrive au pont redresseur 21 via un dispositif de filtrage et de protection connu 29 qui ne fait pas partie de l'invention. Le courant redressé disponible aux bornes du condensateur 27 traverse un circuit 65 de limitation du courant, dont le schéma est classique. En cas d'excès de courant, ce circuit relie l'émetteur du transistor 30 à la borne 18, ce qui amène à zéro la référence 34 de tension de régulation de l'alimentation, dont la tension chute alors par l'effet de la régulation. Ce circuit est utile à la mise sous tension pour limiter le courant de charge du condensateur 17, et aussi bien entendu en cas de défaillance de la charge ou des autres circuits utilisateurs.

Le dispositif comparateur 10 de la figure 1 est ici représenté par les éléments 30 à 35. Un pont diviseur placé entre les bornes 18, 19 et constitué des deux résistances 31, 33 en série avec entre elles un potentiomètre 34 amène sur la base du transistor PNP 30 une fraction de la tension délivrée. D'autre part, l'émetteur de ce transistor 30 est relié à la borne 18 par une diode zener 34, qui constitue donc la référence de tension de l'alimentation. Si la tension délivrée dépasse une valeur spécifiée, le transistor 30 devient conducteur.

Le condensateur 35 aux bornes de la zener 34 a pour effet qu'à la mise sous tension, la référence est d'abord nulle puis croît avec une vitesse que l'on peut adapter en choisissant la valeur du condensateur. On ralentit ainsi la montée de la tension d'alimentation à la mise sous tension.

Le circuit de commande 12 de la figure 1 est ici représenté par les éléments 45 à 51. Le courant de collecteur du transistor 30 est amené à la base du transistor PNP 49 via les résistances 45 et 46 en série. Le transistor 49 est monté en émetteur suiveur entre une borne d'alimentation 52 et la borne la plus négative 23. Son émetteur est relié via une diode 50 de décalage de tension à la base d'un transistor NPN 51 monté en émetteur commun entre les mêmes bornes que le transistor 49. Enfin le collecteur de ce transistor 51 est relié à la base du transistor de puissance hacheur 15. Les deux transistors 49 et 51 sont nécessaires pour fournir un courant de base suffisant au transistor 15. En outre ils "retournent" le courant de commande : le courant issu du collecteur du transistor 30 ne s'écoule pas dans la bonne direction pour commander la base du transistor 15. Enfin, un circuit RC série 47, 48 branché entre le collecteur du transistor 15 et la base du transistor 49 forme un circuit de réaction qui aide à l'oscillation en accélérant les transitions, et réduit ainsi la dissipation dans le transistor 15.

Le dispositif retardeur 11 de la figure 1 est constitué ici par les éléments 53 à 58. Les deux condensateurs 53 et 54 en série entre la borne 19 et la borne 23 se chargent lors de la mise sous tension en proportion inverse de leurs valeurs. Ceci fournit dès le début une tension aux bornes du condensateur 54 qui est amenée à la connexion 52 pour servir d'alimentation au circuit de commande 49-51 et permettre la saturation du transistor 15. Un condensateur 56 relie le collecteur de ce transistor au condensateur 54 via une diode 55 dont l'anode est du côté du transistor 15. A chaque remontée de la tension aux bornes du transistor, la vitesse de charge de ce condensateur 56 définit la vitesse de montée de la tension de collecteur. En outre une diode 58 dont l'anode est réunie à la borne 23 et dont la cathode est reliée par une inductance 57 à l'anode de la diode 55 constitue une sorte de doubleur de tension et permet la fourniture d'un courant continu moyen au travers de la diode 55. C'est ce courant qui est amené à la connexion 52 pour alimenter le circuit de commande 49-51.

Lorsque le courant dans la diode 16 s'arrête parceque l'inductance 6 a fini de se décharger, il s'instaure un système complexe d'oscillations entre ladite inductance et sa propre capacité parasite d'une part, et entre l'inductance et la capacité 56 d'autre part, créant des arches de sinusoïde redressées par les diodes 55 et 58. Tout ceci ne perturbe pas le fonctionnement global de l'alimentation, d'autant plus que rapidement après l'arrêt du courant dans la diode 16, la tension fournie par l'alimentation diminue aux bornes du condensateur 17, ce qui entraîne une nouvelle phase de conduction du transistor 15, par l'action du comparateur 30-34 associé au circuit de commande 44-51.

Avec les valeurs de composants indiquées in fine, la fréquence d'oscillation libre se situe aux alentours de 30 kilohertz pour une puissance délivrée de 40 Watts. Lorsque l'on passe à l'état de veille, la puissance est faible (environ 10W) et la fréquence de découpage diminue jusqu'au moment ou le transistor 15 ne fonctionne plus que par salves avec une fréquence de récurrence d'environ 7 kilohertz. Les tensions vis à vis de la borne la plus négative 23 sont de 200 volts sur la borne 19 et de 300 volts sur la borne 18, et la self 6 "voit" donc alternativement 200 volts dans un sens et 100 dans l'autre.

Le circuit 24 de la figure 1 pour la synchronisation, est constitué ici par les éléments 59 à 62. Les impulsions de retour ligne transmises à partir du condensateur 28 sont transformées en dents de scie par le circuit intégrateur 59, 60, fait du montage en série d'une résistance 59 et d'un condensateur 60 entre respectivement le condensateur 28 et la masse. La diode 62 branchée entre la borne 23 et le condensateur 28 restitue une composante continue. A partir du point commun du condensateur 60 et de la résistance 59, le signal en dents de scie est transmis, via un condensateur 61 et une résistance 44 en série, au point commun des résistance 45, 46 précédemment mentionnées. Ces dents de scie sont donc superposées à une composante de tension continue variable, engendrée par le circuit comparateur 30-34 aux bornes des résistances 45, 46. Il en résulte que la base du transistor 49 est attaquée à la fréquence de la dent de scie avec un facteur de forme variable commandé par le circuit comparateur. Ceci est un procédé connu, qui vient ici se superposer au procédé utilisé par le système de commande du transistor 15 selon l'invention, mais seulement lors du passage de l'état de veille à l'état de fonctionnement.

L'étage de balayage de ligne est constitué de façon classique par un transistor commutateur 13 en parallèle avec une diode de récupération 39 et un condensateur d'accord 38, 28 pour définir l'impulsion de retour ligne, le tout placé en série avec l'enroulement primaire 20 du transistor ligne 2. Ce montage est alimenté à partir des bornes 18, 19 de l'alimentation à découpage. Une cellule de filtrage supplémentaire constituée d'une inductance série 37 et d'une capacité parallèle 36, qui ne font pas partie de l'invention, est ajoutée pour diminuer encore l'ondulation de la tension d'alimentation appliquée à l'étage de balayage ligne. Le bobinage déviateur ligne pourrait être connecté de façon habituelle au collecteur du transistor 13. Mais il faudrait alors qu'il assure l'isolement secteur entre ses bobinages ligne et ses bobinages trame, puisque les étages de balayage trame font partie des circuits utilisateurs isolés du secteur. C'est pourquoi on a préféré brancher le déviateur ligne 14 au secondaire du transformateur ligne 2.

A la droite de la ligne de séparation 26 se trouvent, à partir du haut de la figure 2, les enroulements secondaires du transfo-ligne et des diodes de redressement alimentant des électrodes du tube à rayons cathodiques du téléviseur : la très haute tension, la tension dite focus au moyen d'un potentiomètre 63, la tension de grille G2, puis des circuits vidéo (210V), le filament du tube (f), puis l'ensemble des autres circuits sous des tensions de 12V ou 34V.

Un circuit stabilisateur 64 est utilisé pour l'alimentation à 12 Volts, afin d'affiner encore son degré de stabilisation. Ensuite un enroulement alimente le déviateur 14 au travers de divers éléments de correction connus et qui ne font pas partie de l'invention.

En bas de la figure, un enroulement auxiliaire de l'inductance ballast 6 alimente par l'ensemble redresseur 43 le dispositif de veille 4, l'oscillateur ligne 3, et aussi un ensemble de transistors NPN 40-42. Les chemins de courant principal des transistors 41 et 40 sont montés en série et reliés à l'alimentation 43 par une résistance. Leur point commun est relié à la base du transistor 42 monté en émetteur commun et relié à l'alimentation par un enroulement d'un transformateur d'isolement 9, dont l'autre enroulement est branché en parallèle sur l'espace émetteur-base du transistor de puissance ligne 13. Le dispositif de veille est relié à la base du transistor 40 pour le commander, et l'oscillateur ligne est relié à celle du transistor 41 dont l'émetteur est à la masse. Lorsque le dispositif de veille rend le transistor 40 passant, le transistor 41 chargé par la résistance 67 amplifie le signal de synchronisation de l'oscillateur ligne et l'applique au transistor 42, lequel attaque directement la base du transistor de puissance ligne 13 via le transformateur 9. Lorsque le dispositif de veille rend le transistor 40 bloqué, la base du transistor 42 ne peut plus recevoir de courant depuis l'alimentation et ce transistor est bloqué, ainsi que le transistor de puissance 13 et tout le balayage ligne : c'est l'état de veille.

A ce moment l'alimentation continue à auto-osciller et à fournir la même tension aux bornes 18, 19. L'inductance ballast 6 continue à "voir" alternativement 200V dans un sens et 100V dans l'autre et donc son enroulement auxiliaire fournit toujours une tension au circuit redresseur 43.

Le circuit de la figure 2 a donné de bons résultats avec les valeurs suivantes des composants contribuant à la mise en oeuvre de l'invention, pour un téléviseur dont la consommation de service est d'environ 90 Watts :

Capacités :

17 = 33 $\mu$F
27 = 68 $\mu$F
28 $\simeq$ 0,1$\mu$F
35 = 220 nF
38 $\simeq$ 10 nF
48 = 120 pF
53 = 4,7 $\mu$F
54 = 22 $\mu$F
56 = 6,8 nF
60 = 15 nF
61 = 15 nF

Résistances & Potentiomètres :

31 = 82 K$\Omega$
32 = 10 K$\Omega$
33 = 18 K$\Omega$
44 = 33 K$\Omega$
45 = 10 K$\Omega$
46 = 1 K$\Omega$
47 = 10 M$\Omega$
59 = 1,5 k$\Omega$
68 = 5,6 K$\Omega$
69 = 100$\Omega$

Semiconducteurs :

15 = BUT 11
16 = BYD33G
30 = BF 421
34 = BZX79B22V
49 = BC 327
50 = 1N4148
51 = BC548
55,58 = BYD33G
62 = 1N4148

Inductances :

6 = 1,3 mH
57 = 2 mH
transformateur lignes = AT2077/80 (Philips)

Ce circuit est si simple qu'il peut être économiquement réalisé en composants discrets.

Bien entendu divers variantes sont possibles sans sortir du cadre de l'invention. Par exemple l'ordre dans lequel sont connectés les trois éléments fondamentaux en série de l'alimentation à découpage (17, 6, 15) pourrait être changé. Le déviateur 14 pourrait être monté au primaire, ce qui simplifirait la réalisation d'une correction est/ouest, mais son isolement devrait alors être renforcé. En outre le transformateur d'isolation 9 peut être remplacé par un coupleur optoélectronique. Ce dernier étant incapable de transférer assez de puissance pour commander la base du transistor 13, il faut alors prévoir un étage de commande tel que suggéré en 8, figure 1. Par exemple le transistor 42 peut alors être situé entre le coupleur et le transistor 13, c'est-à-dire dans la partie non isolée du montage. Le choix entre la solution avec transformateur et la solution avec coupleur dépend du prix de revient de l'ensemble des éléments afférents.

- Liste des références de la figure 1 -

1 -   Etage de puissance pour le balayage lignes
2 -   Transformateur lignes
3 -   Oscillateur lignes
4 -   Dispositif de veille
5 -   Dispositif hacheur de l'alimentation à découpage
6 -   Inductance ballast de l'alimentation à découpage
7 -   Circuits utilisateurs
8 -   Circuit de commande du transistor 13
9 -   Elément d'isolation galvanique interposé sur la commande du transistor 13
10 -   Dispositif comparateur
11 -   Dispositif retardant la vitesse de montée de la tension à ses bornes
12 -   Circuit de commande du dispositif hacheur
13 -   Transistor interrupteur de balayage lignes
14 -   Déviateur lignes
15 -   Transistor hacheur de l'alimentation à découpage
16 -   Diode de récupération de l'alimentation à découpage
17 -   Deuxième condensateur réservoir
18 -   Borne positive de l'alimentation, et du redresseur secteur 21
19 -   Borne négative de l'alimentation.
20 -   Enroulement primaire du transformateur lignes
21 -   Dispositif de redressement de la tension du secteur
22 -   Tension du secteur, alternatif
23 -   Borne négative du redresseur 21
24 -   Circuit pour la synchronisation du découpage à partir du balayage lignes
25 -   Etage de puissance audio
26 -   Ligne immatérielle indiquant la séparation galvanique vis à vis du secteur 22
27 -   Premier condensateur réservoir
28 -   Condensateur de liaison et d'isolation galvanique pour la synchronisation.

**Revendications**

1. Récepteur de télévision muni d'un dispositif de veille, comportant une alimentation à découpage avec une inductance ballast (6) et un dispositif hacheur (5) qui alimente un étage de puissance (1) de balayage lignes comportant un transistor interrupteur (13) et un transformateur lignes (2), la plupart des autres circuits utilisateurs (7) étant alimentés au moyen d'enroulements auxiliaires du transformateur lignes (2), l'alimentation à découpage étant synchronisée en marche normale par le balayage lignes et la mise en veille étant obtenue par l'arrêt du balayage lignes, caractérisé en ce que, l'étage de puissance pour le balayage lignes étant alimenté par connexion galvanique (18, 19) avec l'alimentation à découpage et l'arrêt du balayage lignes pour la mise en veille étant obtenu par coupure du transistor interrupteur (13), le dispositif de veille (4) est alimenté directement par l'alimentation à découpage au moyen d'un transformateur distinct du transformateur de lignes, et en ce que l'alimentation à découpage est munie de moyens d'auto-oscillation et de régulation autonomes (10, 12), afin que lorsque le balayage lignes est arrêté, l'alimentation à découpage continue à fournir la même tension.

2. Récepteur selon la revendication 1, caractérisé en ce que ledit transformateur distinct du transformateur de lignes est constitué à partir de l'inductance ballast (6) qui est munie à cet effet d'au moins un enroulement auxiliaire pour alimenter le dispositif de veille.

3. Récepteur selon la revendication 2, caractérisé en ce que l'oscillateur lignes (3) est lui aussi alimenté par en enroulement auxiliaire de l'inductance ballast (6).

4. Récepteur selon l'une quelconque des revendications 1 à 3, caractérisé en ce que la commande du dispositif hacheur et la régulation de la tension fournie par l'alimentation à découpage sont assurées ensemble par un dispositif comparateur (10) qui pilote le circuit de commande (12) du dispositif hacheur (5) de façon à déclencher sa conduction lorsque ladite tension est inférieure à une valeur de référence, et à arrêter cette conduction dans le cas contraire.

5. Récepteur selon l'une quelconque des revendications 1 à 4, caractérisé en ce que le déviateur lignes (14) est branché au secondaire du transformateur lignes (2).

6. Récepteur selon l'une quelconque des revendications 1 à 5, caractérisé en ce qu'il est muni d'un dispositif capacitif retardeur (11) pour ralentir la montée de la tension appliquée au dispositif hacheur, et en ce que ce dispositif retardeur comporte un système à diode pour redresser une tension, cette dernière étant appliquée à titre d'alimentation au circuit de commande (12) du hacheur (5).

7. Récepteur selon l'une quelconque des revendications 1 à 6, caractérisé en ce que parmi les circuits utilisateurs, l'étage de puissance audio (25) est lui aussi alimenté par un enroulement auxiliaire de l'inductance ballast (6).

**Claims**

1. A television receiver provided with a stand-by device, comprising a switched-mode power supply with a storage inductor (6) and a switching device (5) which supplies a power stage (1) for the line deflection having a switching transistor (13) and a line transformer (2), while most other user circuits (7) are supplied via auxiliary windings of the line transformer (2), the switched-mode power supply being synchronized in normal operation by the line deflection and the stand-by state being obtained by stopping the line deflection, characterized in that, with the power stage for the line deflection being supplied via a galvanic connection (18, 19) with the switched-mode power supply and the line deflection being stopped for the stand-by state by cutting off the switching transistor (13), the stand-by device (4) is directly supplied by the switched-mode power supply by means of a transformer which is separate from the line transformer, and in that the switched-mode power supply includes independent self-oscillating and regulating means (10, 12) to ensure that the switched-mode power supply continues to supply the same voltage when the line deflection is stopped.

2. A receiver as claimed in Claim 1, characterized in that said transformer which is separate from the line transformer is constituted by the storage inductor (6) which is provided with at least one auxiliary winding for supplying the stand-by device.

3. A receiver as claimed in Claim 2, characterized in that the line oscillator (3) is also supplied from an auxiliary winding of the storage inductor (6).

4. A receiver as claimed in any one of Claims 1 to 3, characterized in that the control of the switching device and the voltage regulation provided by the switched-mode power supply are together ensured by a comparator (10) which drives the control circuit (12) of the switching device (5) in such manner as to trigger its conduction when said voltage is less than a reference value and to stop this conduction in the opposite case.

5. A receiver as claimed in any one of Claims 1 to 4, characterized in that the line deflection coil (14) is connected to the secondary winding of the line transformer (2).

6. A receiver as claimed in any one of Claims 1 to 5, characterized in that it includes a capacitive delay device (11) for delaying the increase of the voltage applied to the switching device, and in that this delay device comprises a diode arrangement for rectifying a voltage, the voltage obtained being applied as a supply voltage to the control circuit (12) of the switching device (5).

7. A receiver as claimed in any one of Claims 1 to 6, characterized in that among the user circuits the audio power stage (25) is also supplied from an auxiliary winding of the storage inductor (6).

**Patentansprüche**

1. Fernsehempfänger mit Stand-By-Einrichtung, der ein Schaltnetzteil mit einer Speicherinduktivität (6) und einer Schaltanordnung (5) enthält, die eine Leistungsstufe (1) zur Zeilenablenkung versorgt, welche Leistungsstufe einen Schalttransistor (13) und einen Zeilentransformator (2) enthält, wobei die Mehrzahl der anderen Benutzerschaltungen (7) mit Hilfe von Hilfswicklungen des Zeilentransformators (2) versorgt werden, wobei das Schaltnetzteil im Normalbetrieb von der Zeilenablenkung synchronisiert wird und der Stand-By-Zustand durch Anhalten der Zeilenablenkung erreicht wird, dadurch gekennzeichnet, daß, während die Leistungsstufe für die Zeilenablenkung über eine galvanische Verbindung (18,19) mit dem Schaltnetzteil versorgt und das Anhalten der Zeilenablenkung zum Erreichen des Stand-By-Zustandes durch Sperren des Schalttransistors (13) erreicht wird, die Stand-By-Einrichtung (4) direkt vom Schaltnetzteil mit Hilfe eines vom Zeilentransformator getrennten Transformators versorgt wird, und daß das Schaltnetzteil mit einzelnen Mitteln zur selbsterregten Schwingung und zur Regelung (10, 12) versehen ist, damit das Schaltnetzteil nach Anhalten der Zeilenablenkung nach wie vor dieselbe Spannung liefert.

2. Empfänger nach Anspruch 1, dadurch gekennzeichnet, daß der vom Zeilentransformator getrennte Transformator von der Speicherinduktivität (6) gebildet wird, die hierzu mit mindestens einer Hilfswicklung zur Versorgung der Stand-By-Einrichtung versehen ist.

3. Empfänger nach Anspruch 2, dadurch gekennzeichnet, daß der Zeilenoszillator (3) ebenfalls mittels einer Hilfswicklung der Speicherinduktivität (6) versorgt wird.

4. Empfänger nach einem der Ansprüche 1 bis 3, dadurch gekennzeichnet, daß die Ansteuerung der Schaltanordnung und die Regelung der vom Schaltnetzteil gelieferten Spannung gemeinsam durch eine Vergleichsanordnung (10) sichergestellt werden, die die Steuerschaltung (12) der Schaltanordnung (5) so steuert, daß deren Leitfähigkeit ausgelöst wird, sobald die erwähnte Spannung einen Bezugswert unterschreitet, und die im gegenteiligen Fall diese Leitfähigkeit stoppt.

5. Empfänger nach einem der Ansprüche 1 bis 4, dadurch gekennzeichnet, daß die Zeilenablenkstufe (14) an die Sekundärwicklung des Zeilentransformators (2) angeschlossen ist.

6. Empfänger nach einem der Ansprüche 1 bis 5, dadurch gekennzeichnet, daß er mit einer kapazitiven Verzögerungsanordnung (11) ausgerüstet ist, um den Anstieg der der Schaltanordnung zugeführten Spannung zu dämpfen, und daß diese Verzögerungsanordnung ein Diodensystem zur Gleichrichtung einer Spannung enthält, wobei letztere zur Versorgung der Steuerschaltung (12) der Schaltanordnung (5) zugeführt wird.

7. Empfänger nach einem der Ansprüche 1 bis 6, dadurch gekennzeichnet, daß von den Benutzerschaltungen die Audio-Leistungsstufe (25) ebenfalls von einer Hilfswicklung der Speicherinduktivität (6) versorgt wird.

FIG.1

FIG.2

EP 0 274 152 B1